(19) Europäisches Patentamt
European Patent Office
Office européen des brevets

(11) Numéro de publication: **0 402 269 A1**

# (12) DEMANDE DE BREVET EUROPEEN

(21) Numéro de dépôt: **90401576.5**

(51) Int. Cl.[5]: **C08G 61/12**

(22) Date de dépôt: **08.06.90**

(30) Priorité: **08.06.89 FR 8907610**

(43) Date de publication de la demande: **12.12.90 Bulletin 90/50**

(84) Etats contractants désignés: **AT BE CH DE DK ES FR GB GR IT LI LU NL SE**

(71) Demandeur: **CENTRE NATIONAL DE LA RECHERCHE SCIENTIFIQUE (CNRS)**
**15, Quai Anatole France**
**F-75007 Paris(FR)**

(72) Inventeur: **Fichou, Denis**
**1, rue Delambre**
**F-75014 Paris(FR)**
Inventeur: **Horowitz, Gilles, Gabriel**
**4, Domaine de la Butte à la Reine**
**F-91120 Palaiseau(FR)**
Inventeur: **Garnier, Francis**
**17 Villa Rémy**
**F-94500 Champigny(FR)**

(74) Mandataire: **Tonnellier, Jean-Claude et al**
**Cabinet Nony & Cie. 29, rue Cambacérès**
**F-75008 Paris(FR)**

## (54) Procédé de préparation d'oligomères d'hétérocycles aromatiques par couplage oxydant d'oligomères inférieurs.

(57) Procédé de préparation d'oligomères hétérocycliques aromatiques, caractérisé par le fait que l'on utilise comme produit de départ au moins un oligomère d'hétérocycle aromatique dont au moins les motifs cycliques extrêmes sont des hétérocycles ayant 5 chaînons et un seul hétéroatome, ledit hétérocycle à 5 chaînons étant éventuellement substitué en position autre qu'en position alpha et comportant éventuellement en position alpha un substituant compatible avec l'oligomérisation et avec le transfert de conjugaison, ledit oligomère de départ ayant de 2 à 12 groupements cycliques et/ou hétérocycliques, que l'on soumet ledit oligomère de départ, en solution dans un solvant, à une réaction de couplage oxydant, à un potentiel d'oxydation inférieur à celui de la réaction de polymérisation, pour obtenir un oligomère correspondant, ayant de 4 à 24 motifs cycliques et/ou d'hétérocycliques, et que, si désiré, on soumet le produit obtenu à un dédopage selon les méthodes connues.

Le couplage oxydant peut être effectué par voie chimique ou électro-chimique.

EP 0 402 269 A1

Xerox Copy Centre

## Procédé de préparation d'oligomères d'hétérocycles aromatiques par couplage oxydant d'oligomères inférieurs

La présente invention a pour objet un procédé de préparation d'oligomères de dérivés hétérocycliques aromatiques.

On sait que certains oligomères du thiophène ont des propriétés biologiques intéressantes ; voir par exemple les références citées par JUZO NAKAYAMA et al, Heterocycles, vol.27, n° 7, 1731-1754 (1988).

On sait également que les oligomères du thiophène ont d'intéressantes propriétés de semi-conducteurs, qui permettent de les utiliser comme matériaux actifs dans des dispositifs électroniques ; voir par exemple D.FICHOU et al, Chemtronics, vol.3, p.176-178 (1988).

On a déjà décrit par ailleurs divers polymères conjugués d'hétérocycles aromatiques tels que le thiophène, le pyrrole, le furanne, etc..., qui, sous la forme cationique salifiée (dite encore dopée), constituent des polymères organiques conducteurs faisant l'objet actuellement d'importantes recherches; voir par exemple les demandes de brevet européen n° 0160207, 0206414 et 0240063, et le brevet US 4.731.408. Divers auteurs ont indiqué que les oligomères à chaîne courte correspondants sont intéressants comme composés modèles pour l'étude et la compréhension des propriétés électroniques de ces polymères; voir par exemple (a) D.FICHOU et al., in "Organic Materials for Nonlinear Optics", R.A. HANN and D.BLOOR Editors, The Royal Society of Chemistry, London, 1989; (b) M.DORY et al, Mat. Res. Soc. Symp., Proc. vol. 109, p.239, 1988; (c) L.LAGUREN-DAVIDSON et al, J.Electrochem. Soc., 1988, 135(6), 1406; (d) C.KOLMAR et al, Chem. Phys., 1988, 88(2), 1343; (e) S.PUGH et al., Synth. Met., 1989, 28(3), C187; (f) L.W. SHACKLETTE et al, J. Chem. Phys., 1988, 88(6), 3955.

En outre, dans les applications pratiques, l'utilisation d'oligomères, qui sont des composés chimiques définis, présente divers avantages (notamment de reproductibilité) par rapport à l'utilisation de polymères, qui sont en fait des mélanges de macromolécules de tailles différentes.

Il apparaît donc nécessaire de pouvoir disposer d'une méthode simple et générale de préparation de tels oligomères.

Diverses méthodes d'obtention d'oligomères du thiophène ont déjà été décrites. Ces méthodes, qui ne sont en général applicables qu'à la synthèse d'un oligomère particulier, comportent toujours plusieurs étapes et/ou nécessitent la préparation préalable de dérivés particuliers du thiophène; voir par exemple JUZO NAKAYAMA et al, article cité ci-dessus.

Une méthode consistant à préparer un dérivé lithié de thiophène (ou d'un oligomère à chaîne courte correspondant), à convertir le dérivé lithié en complexe d'organo-borane correspondant, à neutraliser le complexe par $BF_3$, à faire réagir à nouveau le produit obtenu avec un dérivé lithié du thiophène (ou d'un oligomère à courte chaîne), puis à oxyder le nouveau complexe d'organo-borane obtenu par l'iode, a été décrite par J.KAGAN et al, Tetrahedron Letters, vol.24, n° 38, 4043-4046 (1983). Cette méthode est relativement générale et a permis d'obtenir toute une série d'oligomères, depuis le bi-thiophène jusqu'au sexi-thiophène. Elle comporte toutefois de nombreuses étapes et oblige à opérer à basse température (environ -80° C).

On a déjà décrit la synthèse du p-sexiphényle à partir du biphényle ou du p-terphényle à l'aide d'un acide de Lewis ; voir P. KOVACIC et R.M. LANGE, J. Org. Chem., 29,2416-2420 (1964).

Le brevet US 4.501.686 décrit un procédé de préparation de polymères d'hétérocycles à 5 chaînons par voie électrochimique. Ce brevet mentionne la possibilité d'utiliser un oligomère comme produit de départ, sans que cette possibilité soit illustrée dans la partie expérimentale. Ce brevet US ne suggère pas qu'il est possible d'opérer à des potentiels suffisamment faibles pour obtenir la formation d'un oligomère de rang supérieur, et non de polymères.

On a maintenant découvert, et c'est ce qui fait l'objet de l'invention, un procédé simple et général permettant d'obtenir en une seule étape des oligomères d'hétérocycles à 5 chaînons. Une caractéristique de ce procédé est que le produit de départ n'est pas un monomère, c'est-à-dire un composé ayant un seul motif cyclique, mais un oligomère. On a découvert qu'il est possible d'oxyder de façon ménagée certains oligomères inférieurs d'hétérocycles à 5 chaînons ayant de 2 à 12 motifs (en particulier de 2 à 6 motifs) pour obtenir une réaction de couplage oxydant limitée à une dimérisation ou à une trimérisation de l'oligomère de départ. Cette réaction permet d'accéder de façon simple à des oligomères ayant de 4 à 24 motifs, en particulier de 4 à 12 motifs.

Les oligomères d'hétérocycles à 5 chaînons utilisés comme produits de départ (et par conséquent les oligomères finals) peuvent contenir au moins un groupement arylène, cyclique ou hétérocyclique (l'hétérocycle ayant ici plus de 5 chaînons) intercalé entre des hétérocycles à 5 chaînons. Chaque cycle arylène et chaque hétérocycle à plus de 5 chaînons est présent dans la chaîne oligomère de façon à

permettre le transfert de conjugaison dans la chaîne. Chaque groupement arylène cyclique et hétérocyclique compte pour un motif dans le calcul du nombre de motifs de l'oligomère de départ, au même titre que chaque hétérocycle à 5 chaînons. Les motifs d'extrémité sont des hétérocycles à 5 chaînons dans l'oligomère de départ, et donc aussi dans l'oligomère final. C'est en raison de la présence obligatoire de ces hétérocycles à 5 chaînons que ces oligomères sont appelés ici, par convention, oligomères d'hétérocycles à 5 chaînons.

Un des avantages de ce procédé en une seule étape est qu'il peut être mis en oeuvre en continu.

L'invention a pour objet un procédé de préparation d'oligomères d'hétérocycles aromatiques à 5 chaînons, caractérisé par le fait que l'on utilise comme produit de départ au moins un oligomère d'hétérocycles aromatiques à 5 chaînons, tels que définis ci-dessus, lesdits hétérocycles comportant un seul hétéroatome et étant éventuellement substitués en position autre qu'en position alpha, et comportant éventuellement en position alpha un substituant compatible avec l'oligomérisation et avec le transfert de conjugaison dans l'oligomère, ledit oligomère de départ ayant de 2 à 12 motifs (en particulier de 2 à 6), que l'on soumet ledit oligomère, en solution dans un solvant, à une réaction de couplage oxydant, à un potentiel d'oxydation inférieur à celui de la réaction de polymérisation, pour obtenir un oligomère correspondant, ayant de 4 à 24 motifs (en particulier de 4 à 12) et que, si désiré, on soumet le produit obtenu à un dédopage selon les méthodes connues.

En outre, si désiré, on dépose l'oligomère obtenu, sous la forme d'une couche mince, sur un substrat.

Les oligomères de départ peuvent être soit des oligomères contenant un seul type de motifs répétitifs, soit des oligomères mixtes contenant au moins deux motifs différents.

La réaction de couplage oxydant selon l'invention est une réaction de dimérisation, ou parfois de trimérisation. En opérant avec un mélange de deux oligomères de départ, ayant par exemple un nombre de motifs différents, on peut obtenir des hétérodimères (notamment avec un nombre impair de motifs) qui peuvent être séparés, par exemple par sublimation fractionnée, des homodimères éventuellement formés.

Les produits de départ sont notamment des oligomères inférieurs d'hétérocycles aromatiques tels que le thiophène, le pyrrole, le furanne, qui peuvent comporter en position bêta des substituants non réactifs, c'est-à-dire non susceptibles d'intervenir dans la réaction de couplage oxydant. Lorsque l'oligomère de départ dérive du pyrrole, il peut également comporter un substituant sur l'hétéroatome d'azote.

Les oligomères de départ peuvent dériver notamment d'un monomère (cas d'un oligomère de départ ayant une seule sorte de motifs répétitifs, ou de co-monomères (cas d'un oligomère de départ mixte) correspondant(s) non substitué(s) en position alpha, la liaison entre deux motifs monomères ou co-monomères consécutifs étant une liaison entre deux carbones en position alpha. Il en résulte dans ce cas que, dans les oligomères de départ, le carbone en position alpha, non impliqué dans la liaison intracaténaire, de chacun des deux motifs extrêmes de l'oligomère, n'est pas substitué.

Les oligomères de départ peuvent également dériver d'un monomère (cas d'un oligomère de départ à une seule sorte de motifs répétitifs) ou d'un co-monomère (dans le cas d'un oligomère de départ mixte) comportant sur au moins l'une des positions alpha d'au moins un hétérocycle à 5 chaînons un substituant compatible avec le transfert de conjugaison dans l'oligomère de départ. L'oligomère de départ peut donc comporter, sur le carbone en position alpha, non impliqué dans la liaison intercaténaire, de chacun des deux motifs extrêmes, un tel substituant compatible avec la réaction d'oligomérisation de l'oligomère de départ, c'est-à-dire un substituant compatible avec le transfert de conjugaison dans l'oligomère. Des exemples de tels substituants sont notamment les substituants suivants (pour les motifs monomères et pour l'oligomère de départ) :

- un arylène (par exemple phénylène) éventuellement substitué),
- un arylène hétérocyclique à plus de 5 chaînons (par exemple pyridinylène),
- $C(R') = C(R'')$ - ,
- C≡ - C-,
- $N(R')$ - ,
- N = N-,
- $C(R')$ = N-,
- N = $C(R')$-,

$R'$ et $R''$ représentant indépendamment

- H, un groupement alkyle éventuellement substitué ayant 1 à 12 atomes de carbone ou un groupement aryle éventuellement substitué.

Comme déja indiqué précédemment, les substituants arylènes (cycliques, ou hétérocycliques à plus de 5 chaînons) sont intercalés entre des hétérocycles à 5 chaînons.

Les substituants éventuellement présents en position bêta sont notamment des substituants destinés à modifier la structure électronique du produit (par exemple des substituants conférant à l'oligomère une

structure conjuguée), des substituants modifiant la solubilité (par exemple des groupements alkyle ou aryle conférant la lipophilicité) des substituants conférant des propriétés d'ionosélectivité (par exemple des groupements éther) ou encore des substituants conférant des propriétés d'auto-dopage (par exemple substituants à groupement anionique).

Parmi les produits de départ utilisables on citera en particulier les oligomères de formule I

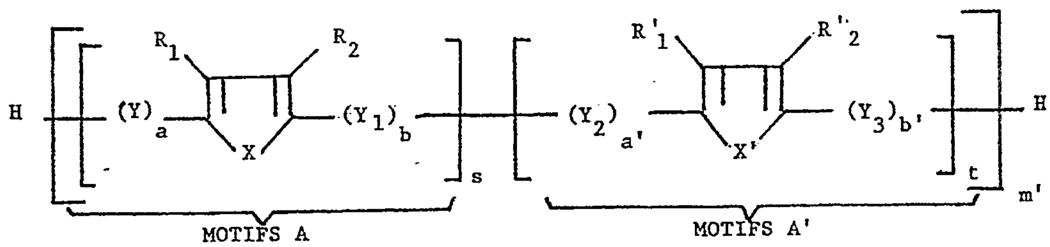

(I)

dans laquelle :

X et X′ représentent indépendamment 0, S, Se, Te ou -N(R)-,

R représentant H, alkyle, alkyle substitué, aryle ou aryle substitué;

$R_1$, $R_2$, $R'_1$ et $R'_2$ représentent chacun indépendamment H, Cl, F, un groupement $-CF_3$, $-NO_2$, -CN, $-COOR_3$, $-NR_4(R_5)$, alkyle, alkyle substitué, aryle, aryle substitué, alkoxy ou polyalcoxy,

$R_3$ représentant un groupement alkyle ou alkyle substitué ou un métal,

$R_4$ représentant H ou un groupement alkyle ou alkyle substitué,

$R_5$ représentant un groupement alkyle, acyle ou aryle, ou bien les couples $R_1$ et $R_2$ et/ou $R'_1$ et $R'_2$ représentent ensemble un groupement hydrocarboné divalent éventuellement insaturé ou éventuellement interrompu et/ou terminé par au moins un hétéroatome,

Y, $Y_1$, $Y_2$ et $Y_3$ représentent indépendamment un groupement :

- $C(R') = C(R'')$ -

- $C \equiv C$ -

- $N(R')$-

- N=N-

- $C(R')=N$-

- $N=C(R')$-,

R′ et R″ représentant indépendamment

-H, alkyle, alkyle substitué, aryle ou aryle substitué,

a, b, a′ et b′ sont des nombres égaux à 0 ou 1,

ou bien $Y_1$ représente en outre un groupement arylène cyclique ou hétérocyclique, et dans ce cas b=1 et a′=0,

s et t sont des nombres entiers, y compris zéro, dont l'un au moins est différent de zéro,

m′ est un nombre entier au moins égal à 1,

les nombres s, t et m′ étant tels que

$m'(s+t) = m$,

m étant un nombre entier de 2 à 12.

Dans l'oligomère de formule I, les motifs A et A′ peuvent être régulièrement alternés ou non. En outre, dans un même oligomère, les substituants et/ou hétéroatomes des motifs peuvent être différents.

Parmi les oligomères de départ on peut également citer les oligomères de formule :

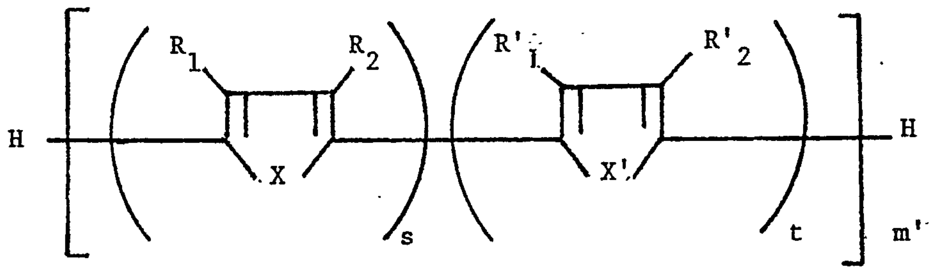
(Ia)

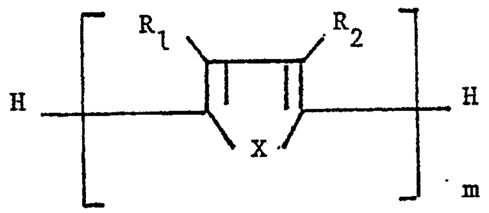
(Ib)

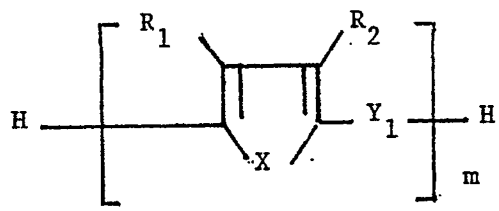
(Ic)

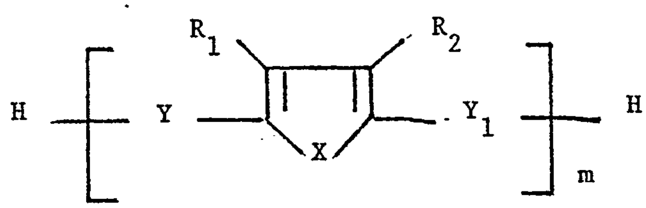
(Id)

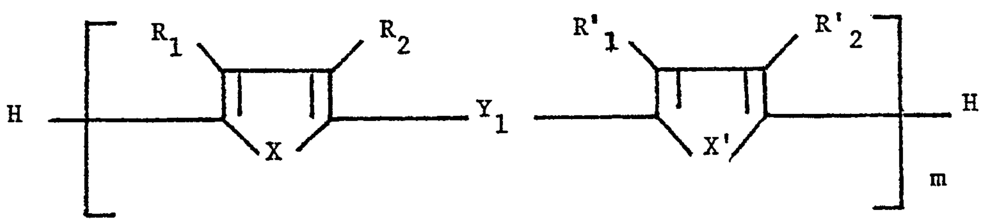
(Ie)

dans lesquelles $R_1$, $R_2$, $R'_1$, $R'_2$, X, X′, Y, $Y_1$, m, m′, s et t sont définis comme précédemment.

Par exemple, parmi les oligomères de formule Ia, on peut citer les composés de formule :

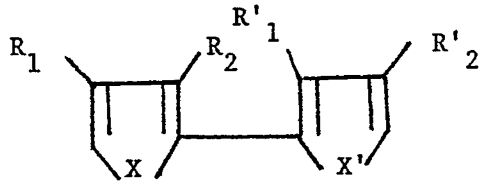

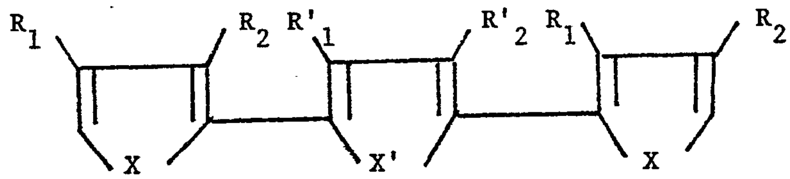

Parmi les oligomères de formule Ie, on peut citer les composés de formule :

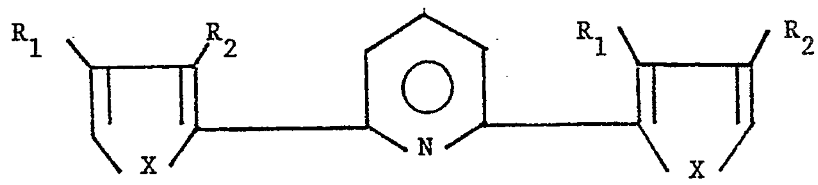

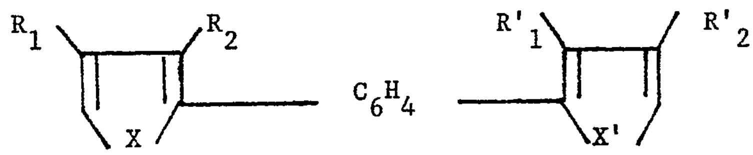

Dans la dernière formule, le groupement phénylène $C_6H_4$ peut être substitué, comme indiqué précédemment, et peut être un groupement o-, m- ou p-phénylène.

Dans la définition ci-dessus, les groupements alkyle, alkyle substitué ou alkoxy ont généralement de 1 à 12 atomes de carbone. Les groupements alkyle substitués sont par exemple des groupements aralkyle, notamment phénylalkyle dont l'alkyle a 1 ou 2 atomes de carbone, ou des groupements alkyle substitués à leur extrémité par un groupement carboxylate, sulfonate ou sulfate. Les groupements arylène cycliques ou hétérocycliques sont notamment choisis parmi les groupements o-, m- ou p-phénylène (éventuellement substitués sur le cycle, par exemple par un ou plusieurs groupements alkyle 1-4C, alkoxy 1-4C, $-NO_2$, etc ...) ou les groupements pyridinylène (en particulier 2,6-pyridinylène). Les groupements aryle sont notamment des groupements phényle. Les groupements aryle substitués peuvent porter notamment des substituants alkyle, alkoxy, halogène, $CF_3$, $NO_2$, sulfonate, carboxylate, etc... Les groupements carboxylate et sulfonate sont salifiés notamment par un métal alcalin (Li, Na, K). Lorsque $R_3$ représente un métal il s'agit notamment d'un métal alcalin. Lorsque $R_5$ représente un groupement acyle, il s'agit d'un groupement acyle dérivé notamment d'un acide alkylcarboxylique ou arylcarboxylique. Lorsque $R_1$ et $R_2$ (ou $R'_1$ et $R'_2$) représentent ensemble un groupement hydrocarboné divalent éventuellement insaturé, il s'agit notamment d'un groupement alkylène ayant de 2 à 12 atomes de carbone, éventuellement insaturé ou interrompu et/ou terminé par des hétéroatomes tels que des hétéroatomes d'oxygène ou de soufre; $R_1$ et $R_2$ (ou $R'_1$ et $R'_2$) peuvent par exemple représenter ensemble un groupement

$-CH_2-CH=CH-CH_2-$,

$-O-(CH_2)_p-$,

$-O-(CH_2CH_2O)_q-$,

p et q étant des nombres entiers de 1 à 12.

Lorsque $R_1$, $R_2$, $R'_1$ et/ou $R'_2$ représentent un groupement polyalkoxy, il s'agit notamment d'un groupement

$-O(CH_2CH_2O)_rCH_2CH_3$,

r étant un nombre entier de 1 à 7, et en particulier de 1 a 4.

Les oligomères de départ peuvent être préparés selon les méthodes connues au départ des monomères correspondants et/ou des oligomères inférieurs. Par exemple, dans le cas de dérivés du thiophène, on peut opérer selon les méthodes décrites par J.KAGAN et al.,J.Org.Chem.,48, 4317, 1983; J.KAGAN et al, Heterocycles, vol. 20, n° 10, 1937-1940, 1983; J.KAGAN et al, Tetrahedron Letters, vol.24, n° 38, 4043-4046, 1983; J.NAKAYAMA et al., Heterocyles, vol.26, n° 4, 937 (1987) et vol. 27, n° 7, 1731-1754, 1988; K.TAMAO et al., Tetrahedron, 38(22), 3347, 1982; S.TASAKA et al., Synth.Met., 16, 17, 1986 ; T. KAUFMANN et al., Angew. Chem. internat. Edit-, Vol 10, N° 10,741 (1971) ; B. KRISCHE et al., J. Chem. Soc., Chem. Commun., 1476 (1987) ; D.D. CUNNINGHAM et al., J. Chem. Soc., Chem. Commun., 1021 (1987) ; R. SHABANA et al., Phosphorus, Sulfur and Silicon, Vol 48, 239-244 (1990) ; A. PELTER et al., Tetrahedron Letters, 30 , 3461 (1989). Les monomères de départ sont eux-mêmes connus ou peuvent être préparés selon les méthodes connues ; voir par exemple les demandes de brevet européen 240.063 et 257.573, le brevet US 4.731.408, la demande de brevet français 2.527.844 et M.KOBAYASHI et al, J.Chem. Phys., 82, 12, 5717-5723, 1985.

Le procédé de l'invention permet d'obtenir, au départ des oligomères de formule I, les oligomères correspondants de formule II :

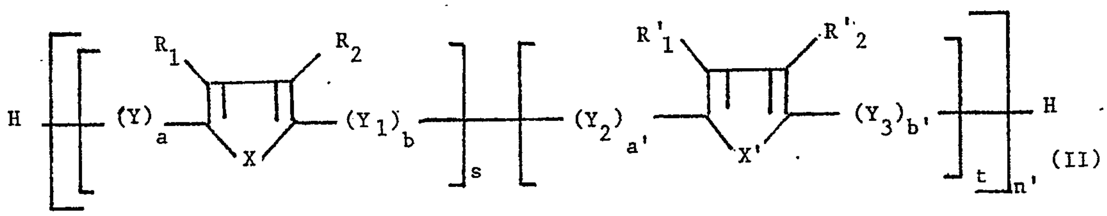

(dans laquelle $R_1$, $R_2$, $R'_1$, $R'_2$, X, X', Y, $Y_1$, $Y_2$, $Y_3$, a, b, a', b', s et t sont définis comme précédemment, et n' est un nombre entier au moins égal à 2,

s, t et n' étant tels que $n'(s+t)=n$, n étant un nombre entier de 4 à 24), sous forme dopée ou dédopée.

En particulier, $n = 2m'$ ou $3m'$, m' étant défini comme précédemment.

Les oligomères de départ de formule Ia, Ib, Ic, Id et Ie donneront respectivement des oligomères finals IIa, IIb, IIC, IId et IIe dont la formule correspond aux oligomères de départ correspondants, mais en remplaçant m' par n' et m par n, n' et n étant définis comme précédemment.

En particulier, $n'=2m'$ ou $3m'$,

et $n=2m$ ou $3m$,

Dans le cas de la dimérisation, la réaction de passage du produit I au produit 11 (forme dédopée) est globalement la suivante (illustrée ici pour raison de simplicité) par les formules Ib et IIb :

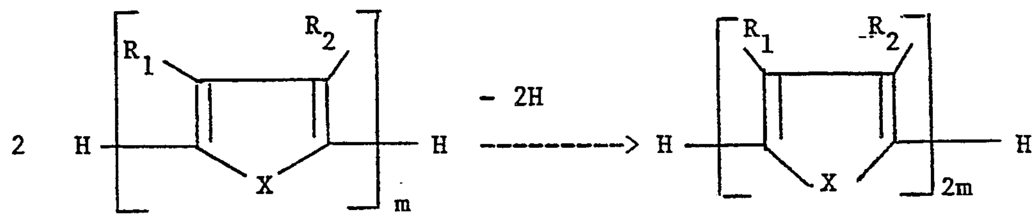


Ib IIb

La réaction de couplage oxydant peut être mise en oeuvre à l'aide d'un acide de Lewis ou d'un acide de Bronsted.

On rappelle qu'un acide de Lewis est un accepteur d'électrons. Une oxydation étant, du point de vue électronique, un perte d'électron, on conçoit que la réaction avec un acide de Lewis soit une oxydation.

Les acides de Bronsted sont des acides protiques. La réaction avec les acides de Bronsted comporte vraisemblablement une étape de fixation d'un proton sur l'oligomère de départ et également une oxydation.

La réaction de couplage oxydant est de préférence mise en oeuvre par addition du réactif oxydant à une solution de l'oligomère de départ dans un solvant organique, en particulier un solvant non miscible à l'eau. L'acide de Lewis, non nécessairement anhydre, peut être ajouté en suspension dans un solvant organique. L'acide de Bronsted est généralement ajouté en solution aqueuse. Dans les deux cas le milieu réactionnel est vigoureusement agité. Dans le cas de l'addition d'un acide de Bronsted, la réaction a lieu dans un milieu réactionnel formant, par agitation, une émulsion.

Toutefois, dans le cas ou l'oligomère de départ et le réactif oxydant (acide de Lewis ou de Bronsted) n'ont pas de solvant commun, il est possible d'opérer dans un système à deux phases liquides, sans agitation, l'oligomère formé précipitant alors à l'interface.

La sélection des acides de Lewis ou de Bronsted qui conviennent pour la réaction de couplage oxydant peut être effectuée facilement par de simples expériences de routine. En effet, la réaction est très rapide et donne lieu presque immédiatement à la formation de l'oligomère final, généralement sous la forme d'un précipité qui, sauf cas particulier, est généralement de couleur foncée.

Parmi les acides de Lewis qui conviennent, on citera plus particulièrement ceux qui se présentent sous la forme d'un sel d'un métal ayant plusieurs degrés d'oxydation, l'acide de Lewis utilisé correspondant à la forme la plus oxydée, ou à l'une des formes oxydées. Parmi les acides de Lewis on peut citer notamment $FeCl_3$, $MoCl_5$, $CuCl_2$, $RuCl_3$.

Parmi les acides de Bronsted qui conviennent, on peut citer plus particulièrement les acides oxydants comme par exemple $H_2SO_4$, $HNO_3$, $HClO_4$, etc...

Le solvant organique utilisé est un solvant capable de solubiliser l'oligomère de départ, et moins oxydable que celui-ci. Lorsque l'oligomère de départ ne comporte pas de groupement polaire, le solvant

peut être un solvant non polaire ou faiblement polaire, ou un mélange de tels solvants.

Parmi les solvants utilisables on citera notamment le benzène, le chlorobenzène, le chloronaphtalène, le chlorure de méthylène, le chloroforme, le benzonitrile, etc...

Avec les oligomères de départ fonctionnalisés comportant des groupements polaires, il est possible d'utiliser d'autres solvants tels que l'eau, des alcools (notamment des alcanols inférieurs), le tétrahydrofuranne, ou l'acétonitrile.

L'oligomère final formé est isolé selon les méthodes usuelles. S'il précipite dans le milieu réactionnel, ou si l'on ajoute en fin de réaction un non-solvant, provoquant la précipitation, l'oligomère final peut être isolé par filtration. Dans les autres cas, on peut isoler l'oligomère final par évaporation du solvant.

La solubilité des oligomères dans les solvants organiques décroît avec la longueur de chaîne. Pour les oligomères de départ correspondant aux valeurs de m les plus élevées, la solubilité dans les solvants organiques est faible (de l'ordre de $10^{-3}$ à $10^{-5}$mole/litre) mais est encore suffisante pour permettre la réaction.

Il est donc généralement possible de trouver des solvants ou des systèmes de solvants tels que l'oligomère final précipite dans le milieu réactionnel. Lorsque ce n'est pas le cas, il est possible le plus souvent, d'isoler l'oligomère final par addition d'un non-solvant provoquant la précipitation.

Dans le milieu réactionnel, la concentration en oligomère(s) de départ est généralement comprise entre $10^{-1}$M et $10^{-5}$M, et on peut utiliser, si désiré, un dispositif approprié pour renouveler en permanence l'apport de l'oligomère de départ, selon les techniques connues. Une telle opération en continu est particulièrement facile à mettre en oeuvre lorsque l'oligomère final précipite dans le milieu.

La quantité d'oxydant, qui dépend du réactif oxydant utilisé, est suffisante pour permettre la réaction de couplage oxydant du produit de départ présent. Cette quantité peut être facilement déterminée dans chaque cas par des expériences de routine. Généralement, elle varie de 1 à 10 moles d'oxydant par mole d'oligomère de départ.

La réaction de couplage oxydant peut être effectuée, de façon générale, à une température comprise entre -20 et + 150 °C, le plus souvent entre 0 et 30 °C. Il peut être parfois utile de chauffer pour augmenter la solubilité de l'oligomère de départ.

L'oligomère de formule I obtenu par voie chimique est en général sous une forme dopée. On pense que la forme dopée est généralement une forme cationique.

En faisant référence, pour raison de simplicité, à la formule IIb, qui représente la forme dédopée, la forme dopée correspond vraisemblablement à la formule :

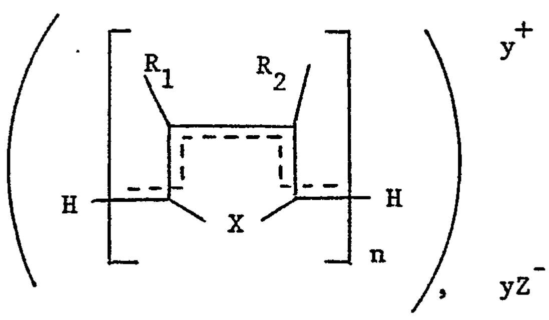

(IIb, forme dopée)

où $R_1$, $R_2$, X et n sont définis comme précédemment, et la ligne de traits interrompus représente une liaison pi délocalisée,
y représente le niveau de dopage (nombre inférieur ou au plus égal à n), et $Z^-$ est un anion provenant du réactif oxydant utilisé.

Pour transformer la forme dopée en forme dédopée, il convient de traiter la forme dopée par une base (au sens de Lewis) ou un agent réducteur. La sélection des agents qui conviennent peut être facilement mise en oeuvre par de simples expériences de routine. En effet, le passage à la forme dédopée est généralement accompagné d'un changement de coloration. En général, la forme dédopée noire, qui absorbe pratiquement toute la lumière visible, est transformée en forme dédopée colorée.

L'agent utilisé pour passer de la forme dopée à la forme dédopée doit solubiliser l'anion dopant. Parmi les agents de dédopage, on citera notamment l'acétone, le méthanol, etc... On peut également effectuer le dédopage par chauffage dans un solvant qui solubilise l'anion dopant, en opérant par exemple à l'ébullition d'un mélange eau-acétone.

La réaction de couplage oxydant peut également être effectuée par oxydation anodique dans une

cellule d'électrolyse. Le procédé consiste alors à soumettre une électrode inerte, immergée dans un solvant contenant l'oligomère de départ et un électrolyte, sous agitation, à un potentiel anodique par rapport à une contre-électrode (cathode). Le potentiel doit être juste suffisant pour effectuer le couplage (dimérisation en général) sans aller jusqu'à la polymérisation qui ne se produit qu'à des potentiels plus élevés (on entend ici par "polymérisation" une réaction qui conduirait à l'obtention d'oligomères de rang supérieur au dimère ou trimère désiré). On peut isoler l'oligomère final de la même façon que celle décrite ci-dessus pour l'oxydation par voie chimique. En pratique, lorsque l'oligomère final précipite dans le milieu, on peut opérer au potentiel le plus faible pour lequel on observe une précipitation.

On a observé que dans le cas des oligomères dérivés du thiophène la méthode électrochimique est particulièrement adaptée pour des oligomères de départ ayant au moins 4 motifs hétérocycliques.

Les solvants utilisables sont généralement les mêmes que ceux mentionnés ci-dessus pour la réaction de couplage oxydant par voie chimique. On peut, comme par voie chimique, opérer en phase hétérogène, en agitant pour former une émulsion.

L'électrolyte est un sel conducteur, de préférence un sel alcalin, ou un sel d'ammonium ou de tétraalkylammonium. Les anions de ces sels sont choisis par exemple parmi : $ClO_4^-$, $BF_4^-$, $BF_6^-$, $AsF_6^-$, $SbF_6^-$, $SbCl_6^-$, $PF_6^-$, $CF_3SO_3^-$, $C_6H_5SO_3$, etc...

La concentration de l'électrolyte peut varier par exemple de 1M à $10^{-3}$M.

Le matériau constituant l'anode, non oxydable dans les conditions électrochimiques utilisées, est par exemple un métal noble ou un alliage de métaux nobles (Pt, Au, alliage Pt-Rh) ou est encore à base de carbone (graphite, carbone vitreux, tissus de fibres de carbone).

La cathode peut être réalisée en métal (par exemple Pt, Au, Ni, Cu, Al) ou en carbone (graphite, carbone vitreux).

La concentration de l'oligomère de départ est comprise par exemple entre $10^{-1}$M et $10^{-6}$M, lorsqu'on opère en solution. En phase hétérogène, on peut opérer avec un excès d'oligomère.

On peut opérer dans une cellule d'électrolyse classique, éventuellement avec recyclage du milieu électrolyte dans le cas où l'on désire opérer en continu ou dans le cas où l'on désire recharger le milieu en oligomère de départ peu soluble.

On peut opérer à potentiel constant, par rapport à une électrode de référence, ou à intensité constante. On utilise pour cela un potentiostat-galvanostat classique.

Lorsque la méthode d'oxydation anodique fournit l'oligomère final sous une forme insoluble qui précipite dans le milieu, il est généralement nécessaire d'agiter, pour éviter le dépôt sur l'anode de l'oligomère formé, et il est possible d'utiliser en outre un système classique à électrode vibrante.

Le produit obtenu par voie électrochimique peut être dédopé, si désiré, selon les méthodes indiquées précédemment.

Les oligomères de formule I, sous forme dédopée, peuvent être purifiés par exemple par sublimation sous pression réduite.

La sublimation permet en outre le dépôt de ces oligomères sous la forme de couches minces, sur un substrat approprié, par exemple un verre, un métal ou un semi-conducteur. La forme dédopée purifiée peut être convertie à nouveau en forme dopée selon les méthodes connues.

Les exemples suivants illustrent l'invention sans toutefois la limiter.

## EXEMPLE 1

### Préparation de l'alpha-sexithiényle

On prépare une suspension de chlorure ferrique non hydraté (13,1g; 81 mmoles) dans 200ml de benzène anhydre. On ajoute lentement cette suspension à une solution d'alpha-terthiényle (Aldrich) (20,0g; 81 mmoles) dans 200 ml de benzène anhydre en agitant vigoureusement à température ambiante. Le mélange réactionnel devient immédiatement noir, avec apparition d'un abondant précipité noir et dégagement d'acide chlorhydrique gazeux. La fin de réaction est vérifiée par addition de chlorure ferrique au mélange réactionnel (absence de formation d'un précipité).

Le précipité d'alpha-sexithiényle (forme dopée) est ensuite filtré et lavé avec du benzène.

On dédope ensuite le précipité par lavages répétés avec l'acétone. Le solide noir devient immédiatement rouge orangé.

Après séchage on obtient 16,8g d'alpha-sexithiényle (forme dédopée) sous la forme d'une poudre. Rendement : 84% en poids.

La pureté du produit est vérifiée par l'analyse du spectre de masse, qui montre l'absence d'oligomères de rang supérieur.

Les spectres infra-rouge et RMN montrent que les couplages sont des couplages alpha-conjugués.

Le produit peut être davantage purifié par sublimation sous pression réduite, de l'ordre de $10^{-5}$ à $10^{-6}$ Torr (soit de $1,33.10^{-3}$ à $1,33.10^{-4}$ Pa environ) à 230-250 °C. Le produit sublimé constitué d'alpha-sexithiényle très pur se présente sous la forme d'une poudre orange. P.F. : 304 °C. Il est caractérisé notamment par son spectre de masse ($M^{\bullet+}$ 100% ; m/e = 494).

## EXEMPLE 2

### Préparation de l'alpha-octithiényle

Le produit de départ est l'alpha-quaterthiényle obtenu selon le procédé décrit par J.Kagan et al, Heterocycles, vol.20, n° 10, 1937-1940 (1983).

On opère de façon analogue à celle décrite à l'exemple 1.

Le produit dédopé est purifié par sublimation sous pression réduite.

Il est caractérisé par son spectre de masse.

Le produit dédopé se présente sous la forme d'une poudre rouge foncé et est caractérisé par son spectre de masse ($M^{\bullet+}$100% ; m/e = 658) ainsi que par son spectre d'absorption à l'état solide.

## EXEMPLE 3

### Préparation de l'alpha-octithiényle par voie électrochimique

Le produit de départ est l'alpha-quaterthiényle, en solution dans l'acétonitrile (concentration : $10^{-3}$M).

La synthèse de l'alpha-octithiényle est effectuée dans une cellule d'électrolyse à un seul compartiment, avec une électrode de travail (anode) en platine; surface : $10cm^2$. L'électrode de référence est une électrode au calomel saturée. La contre-électrode ($10cm^2$) est en aluminium. Le solvant est l'acétonitrile. L'électrolyte est le perchlorate de tétrabutylammonium à une concentration de $10^{-1}$M.

L'électrolyse a été faite à potentiel constant, réglé à l'aide d'un potientiostat/galvanostat.

L'alpha-octithiényle précipite sous la forme d'une poudre rouge brun.

On obtient des résultats analogues en remplaçant l'acétonitrile par le nitrobenzène.

## EXEMPLE 4

### Préparation de l'alpha-décithiényle

Le produit de départ est l'alpha-quinquethiényle obtenu selon la méthode décrite par J.Kagan et al., Heterocycles 20,1937 (1983).

On opère de façon analogue à celle décrite à l'exemple 3.

Le produit obtenu est l'alpha-décithiényle qui est caractérisé par son spectre de masse.

## Revendications

1. Procédé de préparation d'oligomères hétérocycliques aromatiques, caractérisé par le fait que l'on utilise comme produit de départ au moins un oligomère d'hétérocycle aromatique dont au moins les motifs cycliques extrêmes sont des hétérocycles ayant 5 chaînons et un seul hétéroatome, ledit hétérocycle à 5 chaînons étant éventuellement substitué en position autre qu'en position alpha et comportant éventuellement en position alpha un substituant compatible avec l'oligomérisation et avec le transfert de conjugaison, ledit oligomère de départ ayant de 2 à 12 groupements cycliques et/ou hétérocycliques, que l'on soumet ledit oligomère de départ, en solution dans un solvant, à une réaction de couplage oxydant, à un potentiel

d'oxydation inférieur à celui de la réaction de polymérisation, pour obtenir un oligomère correspondant, ayant de 4 à 24 motifs cycliques et/ou d'hétérocycliques, et que, si désiré, on soumet le produit obtenu à un dédopage selon les méthodes connues.

2. Procédé selon la revendication 1, caractérisé par le fait que ledit produit de départ est un oligomère de formule I

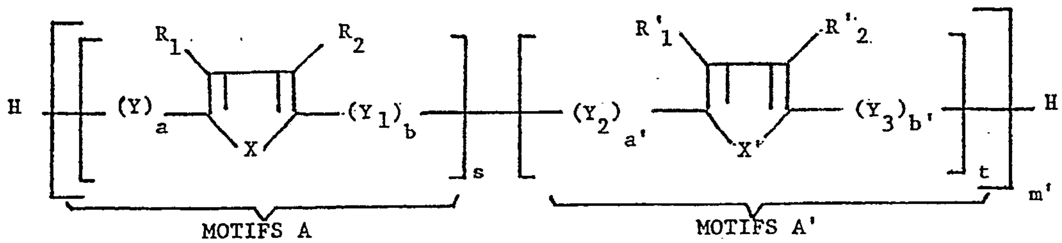

(I)

dans laquelle :
X et X′ représentent indépendamment O, S, Se, Te ou -N(R)-,
R représentant H, alkyle, alkyle substitué, aryle ou aryle substitué;
$R_1$, $R_2$, $R'_1$ et $R'_1$ représentent chacun indépendamment H, Cl, F, un groupement $-CF_3$, $-NO_2$, -CN, $-COOR_3$, $-NR_4(R_5)$, alkyle, alkyle substitué, aryle, aryle substitué, alkoxy ou polyalcoxy,
$R_3$ représentant un groupement alkyle ou alkyle substitué ou un métal,
$R_4$ représentant H ou un groupement alkyle ou alkyle substitué,
$R_5$ représentant un groupement alkyle, acyle ou aryle, ou bien les couples $R_1$ et $R_2$ et/ou $R'_1$ et $R'_2$ représentent ensemble un groupement hydrocarboné divalent éventuellement insaturé ou éventuellement interrompu et/ou terminé par au moins un hétéroatome,
Y, $Y_1$, $Y_2$ et $Y_3$ représentent indépendamment un groupement
- C(R′) = C(R″) -
- C ≡ C -
- N(R′)-
- N=N-
- C(R′)=N-
- N=C(R′)-,
R′ et R″ représentant indépendamment
-H, alkyle, alkyle substitué, aryle ou aryle substitué,
a, b, a′ et b′ sont des nombres égaux à 0 ou 1,
ou bien $Y_1$ représente en outre un groupement arylène cyclique ou hétérocyclique, et dans ce cas b=1 et a′=0,
s et t sont des nombres entiers, y compris zéro, dont l'un au moins est différent de zéro,
m′ est un nombre entier au moins égal à 1,
les nombres s, t et m′ étant tels que
$m'(s+t) = m$,
m étant un nombre entier de 2 à 12.

3. Procédé selon la revendication 1 ou 2, caractérisé par le fait que l'on effectue la réaction de couplage oxydant à l'aide d'un acide de Lewis ou d'un acide de Bronsted.

4. Procédé selon la revendication 3, caractérisé par le fait que l'acide de Lewis est choisi parmi $FeCl_3$, $MoCl_5$, $CuCl_2$ et $RuCl_3$.

5. Procédé selon la revendication 3, caractérisé par le fait que l'acide de Bronsted est un acide oxydant.

6. Procédé selon la revendication 5, caractérisé par le fait que l'acide de Bronsted est choisi parmi $H_2SO_4$, $HNO_3$ et $HClO_4$.

7. Procédé selon la revendication 1 ou 2, caractérisé par le fait que l'on effectue ledit couplage oxydant par oxydation anodique dans une cellule d'électrolyse, à un potentiel anodique juste suffisant pour effectuer le couplage sans aller jusqu'à la polymérisation.

8. Procédé selon la revendication 7, caractérisé par le fait que l'on opère dans un solvant organique contenant l'oligomère de départ et un électrolyte.

9. Procédé selon la revendication 8, caractérisé par le fait que l'on soumet une électrode inerte, immergée dans ledit solvant organique contenant l'oligomère de départ et un électrolyte, sous agitation.

10. Procédé selon l'une quelconque des revendications 7 à 9, caractérisé par le fait que, lorsque

l'oligomère final précipite dans le milieu, on opère au potentiel le plus faible pour lequel on observe une précipitation.

11. Procédé selon l'une quelconque des revendications 1 à 6, 8, 9 et 10, caractérisé par le fait que ledit solvant est choisi parmi le benzène, le chlorobenzène, le chloronaphtalène, le chlorure de méthylène, le chloroforme et le benzonitrile.

Office européen des brevets

# RAPPORT DE RECHERCHE EUROPEENNE

Numero de la demande

EP 90 40 1576

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | CHEMTRONICS, vol. 3, no. 3, septembre 1988, pages 176-178, Butterworth & Co., Ltd, Guildford, GB; D. FICHOU et al.: "Conjugated oligomers for molecular electronics: Schottky diodes on vacuum evaporated films on alpha-sexithienyl" --- | | C 08 G 61/12 |
| A | PATENT ABSTRACTS OF JAPAN, vol. 13, no. 24 (C-561)[3372], 19 janvier 1989; & JP-A-63 230 733 (JAPAN SYNTHETIC RUBBER CO., LTD) 27-09-1988 --- | | |
| A | EP-A-0 260 541 (HONEYWELL INC.) --- | | |
| A | CHEMISCHE BERICHTE GmbH, vol. 114, no. 11, 1981, pages 3674-3683, Verlag Chemie GmbH, Weinheim, DE; T. KAUFFMANN et al.: "Synthese und Eigenschaften von all-alpha-poly(N-methylpyrrolen)" --- | | |
| D,A | US-A-4 501 686 (S. HOTTA et al.) --- | | DOMAINES TECHNIQUES RECHERCHES (Int. Cl.5) |
| D,A | EP-A-0 257 573 (HOECHST AG) --- | | C 08 G |
| A | EP-A-0 315 559 (UNIVERSIDAD DEL PAIS VASCO) ----- | | |

Le présent rapport a été établi pour toutes les revendications

| Lieu de la recherche | Date d'achèvement de la recherche | Examinateur |
|---|---|---|
| LA HAYE | 21-09-1990 | PAULSSON R.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)